# FASCICULE DE BREVET EUROPEEN

(11) **EP 1 303 896 B1**
(45) Date de publication et mention de la délivrance du brevet: **17.03.2004**
(21) Numéro de dépôt: 01958160.2
(22) Date de dépôt: 23.07.2001
(51) Int. Cl.: H02G 1/08

(54) **DISPOSITIF DE POSE DANS UNE CONDUITE PAR AIR COMPRIME D'UN FILIN MUNI D'UN FURET ET PROCEDE CORRESPONDANT**
VORRICHTUNG ZUM VERLEGEN EINES MIT EINEM PFROPFEN VERSEHENEN DRAHTES IN EIN ROHR MITTELS DRUCKLUFT SOWIE ENTSPRECHENDES VERFAHREN
DEVICE FOR AIR-ACTUATED INSERTION OF A WIRE PROVIDED WITH A SHUTTLE IN A CONDUIT AND CORRESPONDING METHOD

(30) Priorité: 25.07.2000 FR 0009748
(43) Date de publication de la demande: 23.04.2003
(73) Titulaire: FRANCE TELECOM, 75015 Paris (FR)
(72) Inventeur: CAMPION, Jean-Luc, F-22700 Saint Quay Perros (FR); MIGNON, Pierre, 34090 Montpellier (FR); JOSIEN, Daniel, F-59780 Willems (FR)
(74) Mandataire: Bentz, Jean-Paul
(86) Numéro de dépôt international: PCT/FR2001/002399
(87) Numéro de publication internationale: WO 2002/009249

(56) Documents cités:
- EP-A- 0 794 603
- WO-A-97/42690
- TAMIO SHINDO ET AL.: "NEW CONDIUT CHECKER" JAPAN TELECOMMUNICATION REVIEW, vol. 22, no. 3, 1980 - juillet 1980 (1980-07), pages 238-242, XP002165152 Tokyo

## Description

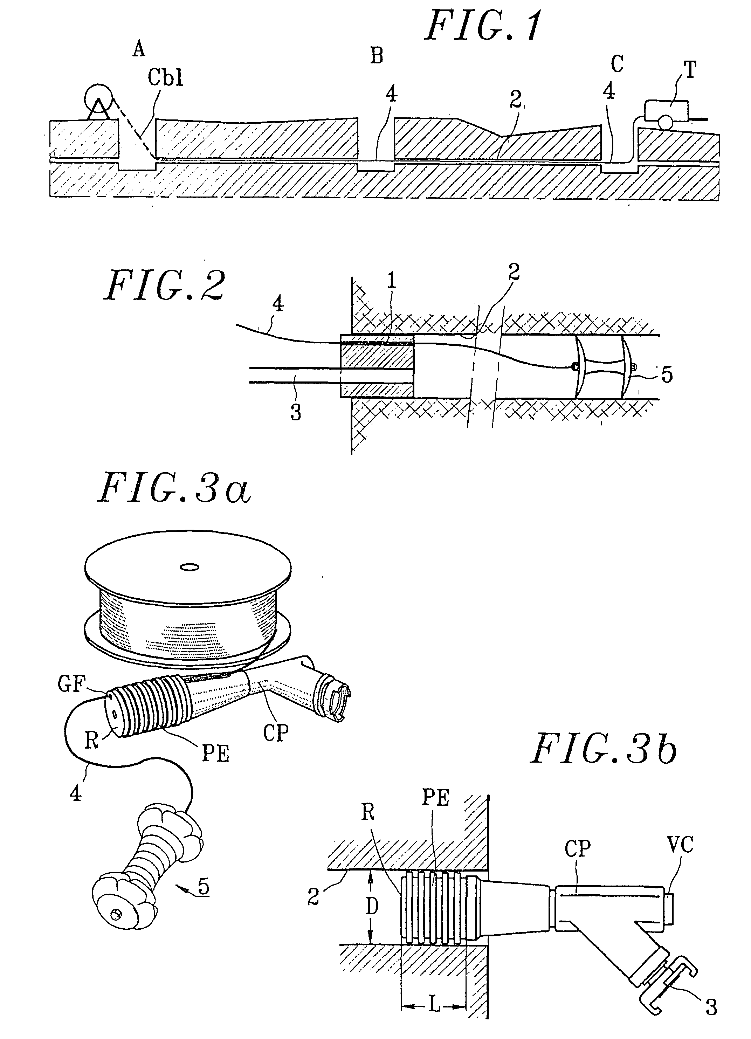

L'invention concerne un dispositif de pose dans une conduite, par air comprimé, d'un filin muni d'un furet.
Elle se rapporte également à un procédé de pose dans une conduite par air comprimé, d'un filin muni d'un furet.
Le domaine de l'invention est celui de la pose dans une conduite d'un câble d'énergie ou de télécommunication par tirage.
La pose d'un câble par tirage consiste à placer au préalable un filin dans la conduite puis à accrocher le câble à l'extrémité du filin, à l'entrée de la conduite et à tirer le filin au moyen d'un treuil de tirage situé à la sortie de la conduite, de façon à introduire progressivement le câble dans la conduite.
Beaucoup de conduites sont installées sans filin. On procède alors à une opération d'aiguillage afin d'introduire un filin d'un bout à l'autre de la conduite.
Il est parfois nécessaire de poser un câble sur une grande longueur le long de plusieurs sections de conduites reliées entre elles par des chambres d'accès aux câbles. Ces chambres sont disposées de façon à faciliter l'installation des câbles et à offrir d'éventuels accès aux câbles par exemple pour réaliser des connexions.
Lors de l'installation du câble, on souhaite en général le faire passer à travers les chambres d'accès sans le sectionner puis le raccorder, et le tirer en une seule fois de manière à éviter de déplacer le treuil de tirage. Cette opération est très pratiquée pour la pose de câbles à fibres optiques en milieu urbain.
Pour cela il est préférable de disposer un filin sur toute la longueur de pose du câble également sans sectionner le filin au niveau des chambres d'accès pour éviter les problèmes de passage de noeuds et de résistance à la traction.
La pose d'un câble par tirage dans une conduite enterrée est schématiquement représentée figure 1. La conduite 2 est constituée de plusieurs sections de conduite séparées par des chambres d'accès A, B et C. Le câble Cbl est présenté dans la chambre d'accès A pour être tiré jusqu'à la chambre d'accès C.
L'équipe de pose du câble procède à un aiguillage successif du même filin 4 dans plusieurs sections de conduite 2. Le treuil T de tirage du filin 4 est placé au niveau de la chambre d'accès C ; le filin 4 est aiguillé vers la chambre B puis de nouveau aiguillé vers la chambre A. Le câble Cbl est alors attaché au filin 4 au niveau de la chambre A et tiré vers la chambre C en passant par la chambre B.
L'aiguillage du filin peut être obtenu par poussage. Le filin très rigide, alors appelé aiguille est introduit à l'une des extrémités de la conduite et aiguillé le long de la conduite par une poussée axiale. La poussée peut être manuelle ; elle peut aussi être obtenue par un appareil de poussée avec dévidoir, disposé face à une des extrémités de la conduite.

Cette technique de pose du filin est utilisée lorsque la conduite ne dépasse pas 150 m et lorsqu'elle est en bon état. Pour la pose de filin en grande longueur ou sur plusieurs sections de conduites, l'aiguillage pneumatique est préféré.
L'aiguillage pneumatique consiste comme illustré figure 2 à boucher partiellement une extrémité de la conduite 2 avec un dispositif d'obturation 1, appelé pistolet d'aiguillage, qui laisse passer le filin 4 équipé d'un furet 5 ainsi qu'un flux d'air 3. Le furet 5 est une pièce exerçant une retenue sur le flux d'air 3 pour ainsi se trouver propulsée sous l'action du flux d'air 3 et glisser à l'intérieur de la conduite 2.
Le pistolet d'aiguillage a donc pour fonction d'obturer partiellement la conduite afin d'obtenir une certaine étanchéité tout en permettant le passage du filin et du flux d'air.
En cas de pose par tirage sur une grande longueur, les opérations d'aiguillage sont réalisées en cascade tout au long du parcours composé de plusieurs sections de conduite. Il est alors utile de pouvoir extraire transversalement le filin du dispositif d'obturation, au niveau d'une chambre intermédiaire afin de récupérer le pistolet et de le réinstaller sur la section de conduite suivante.

On souhaite parfois, préalablement à la pose d'un câble dans une conduite, calibrer la conduite c'est-à-dire vérifier la conformité de la conduite installée. En effet, la pose d'une conduite étant une opération délicate, des erreurs ou accidents peuvent provoquer une ovalisation du diamètre interne de la conduite qui gênera l'exploitation ultérieure de la conduite.
L'opération de calibrage consiste à envoyer un furet du même type que celui qui est utilisé pour l'aiguillage, en lui adjoignant un cylindre solide disposé perpendiculairement à l'axe de la conduite et d'un diamètre déterminé. Ce diamètre appelé diamètre de réception correspond au diamètre minimal disponible et garanti après la pose de la conduite. De la même manière que pour l'aiguillage, le calibrage requiert une obturation de la conduite par un dispositif d'obturation également appelé pistolet d'aiguillage, apte à propulser le furet de calibrage le long de la conduite.
Dans certains cas, les opérations de calibrage et d'aiguillage sont réalisées simultanément.

Il existe différents types de pistolets d'aiguillage.
L'un dit "presse-étoupe" représenté figures 3 a) et 3b) comporte un corps principal CP placé vers l'extérieur de la conduite à aiguiller, une rondelle R rigide placée à l'intérieur de la conduite, un système de presse-étoupe PE cylindrique placé de façon coaxiale à la conduite, une vis creuse VC traversant l'ensemble du pistolet, solidaire de la rondelle R et vissée sur le corps principal CP et dont l'extrémité côté extérieur de la conduite peut être obturée, éventuellement un cylindre guide fil GF placé sur la périphérie du presse-étoupe PE, et enfin une entrée d'air 3 aboutissant dans la conduite 2.

En fonctionnement, le système presse-étoupe PE du pistolet est introduit dans la conduite 2 vide sur la longueur L, le reste du pistolet restant accessible de la chambre d'accès. Le serrage manuel de la vis VC permet de rapprocher la rondelle R du corps principal CP et a pour effet de comprimer axialement le système presse-étoupe PE et de diminuer la longueur L. Ce serrage est réalisé par rotation manuelle du corps CP autour de la vis VC. Le presse-étoupe PE comprimé exerce un effort de pression sur la conduite 2, grâce à l'augmentation des dimensions axiales D du presse-étoupe PE. Cet effort de pression assure l'étanchéité ainsi que le maintien du pistolet dans la conduite par adhérence. La vis creuse VC laisse,passer le flux d'air 3 qui propulse le furet 5 et peut aussi permettre le passage du filin 4.
Selon une variante représentée figure 3a), le filin 4 passe par le cylindre GF fendu vers l'extérieur, ou en deux demi-corps, la vis creuse VC étant alors obturée côté chambre.
Lorsque le flux d'air 3 est soufflé dans la conduite 2, celle-ci est partiellement obturée d'une part par le pistolet 1 et d'autre part par le furet 5 auquel est attaché le filin 4. Une force de pression s'exerce sur le furet 5 qui est propulsé vers l'autre extrémité de la conduite 2 et sur le pistolet 1. La force qui s'exerce sur le pistolet 1 aurait pour effet de chasser le pistolet 1 hors de la conduite 2 s'il n'y était pas maintenu par adhérence.
Dans une conduite propre de diamètre extérieur de 80 mm et de diamètre intérieur de 75 mm, le pistolet résiste à une force d'éjection inférieure ou égale à environ 400 daN. On rappelle que 1 daN équivaut à une masse de 1 kg.
Une fois que le furet 5 atteint l'extrémité de la conduite 2 ou de la section de conduite, le flux d'air 3 est arrêté par un opérateur ; le filin 4 est sectionné ou extrait latéralement et la vis VC desserrée. L'opérateur récupère alors le pistolet 1 qui sera réutilisé.
Le même dispositif a été fabriqué avec une cavité circulaire fendue pour pouvoir recevoir un câble déjà présent dans la conduite.
Dans bien des cas, l'adhérence du pistolet 1 aux parois de la conduite 2 n'est pas suffisante. En effet, plus la vis VC est serrée, plus les efforts de pression entre le presse-étoupe PE et la conduite 2 sont importants ; mais étant donné l'encombrement actuel des chambres d'accès, l'espace pour placer le pistolet 1 est restreint et n'est pas suffisant pour réaliser un serrage efficace. D'autre part les conduites 2 présentent parfois un mauvais état de surface intérieure (reste de graisse de la pose précédente d'un câble, ...) et la surface active du presse-étoupe PE est réduite et donc son adhérence aux parois moins importante.
Le flux d'air 3 communément utilisé est à une pression de 7 bars. Plus la section d'alimentation en air est importante, plus la force d'éjection exercée sur le pistolet diminue. Le tableau suivant présente la force maximale exercée à 7 bars sur le pistolet 1 en fonction du diamètre de la conduite 2.

| Diamètre intérieur de la conduite (mm) | Force maximale exercée sur le pistolet (daN) |
|---|---|
| 96 | 507 |
| 75 | 309 |
| 56 | 172 |
| 41,4 | 94 |
| 30 | 49 |
| 25 | 34 |

Ainsi sous l'action de l'air comprimé, un pistolet adhérant insuffisamment aux parois de la conduite, est violemment chassé à l'extérieur de la conduite risquant d'endommager les câbles et de blesser le personnel.
Enfin, dans le cas d'un aiguillage en cascade, la traction du filin devient plus importante au fur et à mesure que le filin est posé dans les sections de conduite successives, le furet va alors moins vite et retient l'air : la pression sur le pistolet augmente alors, ainsi que le risque que le pistolet soit chassé vers l'extérieur.
Par ailleurs, ce pistolet, d'un coût relativement bas vieillit mal. L'usure du système presse-étoupe PE entraîne le remplacement de l'ensemble du pistolet.

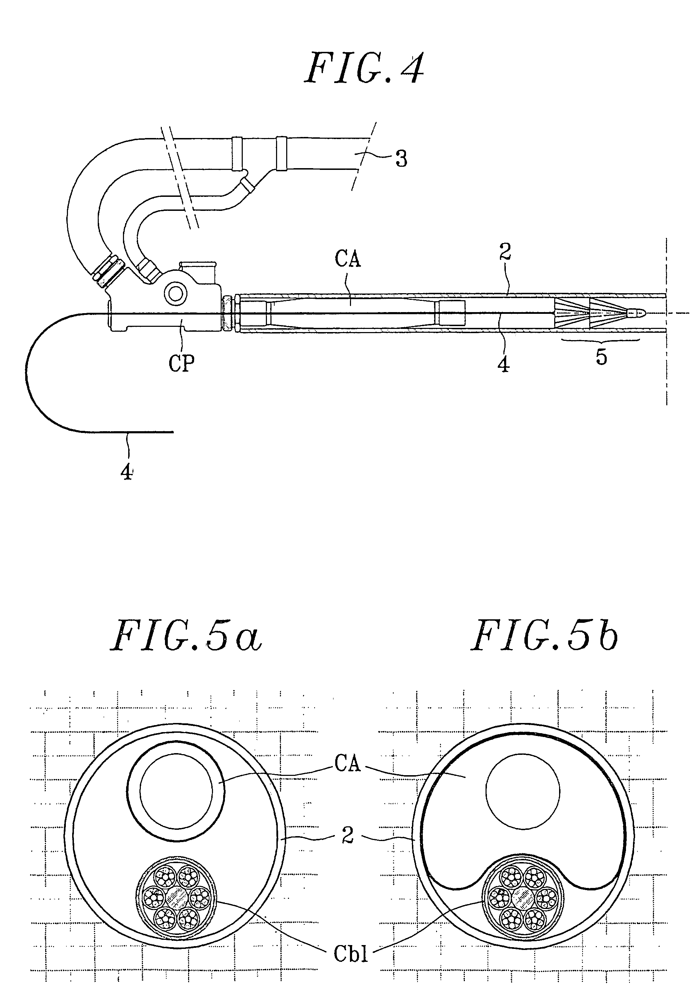

Un autre type de pistolet d'aiguillage est présenté dans la demande de brevet WO 97 42690, qui représente l'état de la technique le plus proche.
Ce pistolet représenté figure 4, repose sur un élément cylindrique gonflable, une chambre à air CA, qui est introduite dans la conduite 2. Les parois dilatables de cette chambre à air CA permettent d'obtenir l'étanchéité par injection d'air comprimé 3. Une source d'air comprimé permet, sans déconnecter, de procéder au gonflage de la chambre à air CA puis à la propulsion dans la conduite d'un furet 5 selon le même principe que décrit pour le pistolet presse-étoupe.
Le gonflage de la chambre à air permet de générer les efforts de contact nécessaires à l'adhérence du pistolet aux parois de la conduite et à son maintien en place malgré les forces de pression internes décrites pour le pistolet presse-étoupe.
Le filin 4 passe librement au travers du corps principal CP puis de la chambre à air CA et est tiré par le furet 5.
Ce pistolet est principalement destiné aux conduites vides car, comme illustré figures 5a) et 5b), la dilatabilité de la chambre à air CA n'est pas suffisante pour obturer une conduite 2 déjà occupée par des câbles Cbl. La chambre à air CA est placée dans la conduite 2 dans laquelle est déjà posé un câble Cbl. La figure 5a) représente la chambre à air CA avant qu'elle ne soit gonflée ; la figure 5b) la représente après son gonflage. La déformation de la chambre à air CA gonflée ne suffit pas, à elle seule, à obtenir une obturation complète de la conduite 2. Ce pistolet s'avère donc inefficace en conduite occupée.
D'autre part, il ne permet pas l'extraction transversale du filin, ce qui oblige soit à laisser le pistolet en place, soit à couper le filin afin de récupérer le pistolet.

De plus, ce pistolet a des dimensions bien encadrées qui ne permettent un emploi que dans des conduites de taille bien particulières. Il en résulte un effet de gamme important et donc un prix d'utilisation important.

L'objectif de l'invention est de pallier aux inconvénients majeurs des deux techniques antérieures, en proposant un dispositif de pose de câble dans une conduite permettant d'assurer une bonne adhérence aux parois de la conduite, même en cas de mauvais état de surface, tout en étant facilement adaptable en fonction des différentes tailles de conduite et dont l'usure n'implique pas un remplacement de l'ensemble des éléments le constituant. De plus, les techniques antérieures ne donnent satisfaction que dans des conditions de mise en oeuvre optimales ( conduites vides et propres, chambres d'accès faiblement encombrées), alors que la plupart des réseaux existants sont anciens et de plus en plus encombrés. Un autre objectif de l'invention est donc de rendre le dispositif proposé efficace lorsqu'il est mis en oeuvre dans des conduites déjà occupées par des câbles, ce qui fait l'objet d'un mode de réalisation particulier de l'invention.
L'invention concerne un dispositif permettant de réaliser une opération d'aiguillage ou de calibrage.
Ce dispositif comprend un élément dilatable, de type chambre à air qui, mis sous pression, comprime une enveloppe dans laquelle il est placé. Cette enveloppe exerce alors une force de contact uniforme sur les parois et sur le ou les câbles déjà présents, sans effort particulier de l'opérateur.
L'enveloppe intègre un tube ou passage fendu facilitant le passage du filin et permettant de le retirer transversalement du dispositif sans avoir à le couper.
L'enveloppe intègre éventuellement une cavité fendue pouvant recevoir les câbles déjà en place.
Les surfaces de contact de cette enveloppe sont enduites d'un matériau granuleux pour renforcer l'adhérence, en particulier si les parois de la conduite sont sales.

Le maintien du pistolet dans le conduite est assuré indépendamment des conditions de chantier (état d'encombrement des chambres d'accès) et du savoir-faire de l'opérateur. Le pistolet risque d'autant moins d'être chassé de la conduite et ainsi d'endommager les câbles ou de blesser l'opérateur.
L'enveloppe est l'élément consommable et la pièce d'usure du dispositif : c'est elle qui est au contact des parois de la conduite et qui subit les contraintes exercées par le passage du filin. Mais c'est un élément bon marché que l'on peut facilement adapter aux cas de figures à traiter.

L'invention a pour objet un dispositif de pose dans une conduite, par air comprimé, d'un filin muni d'un furet, principalement caractérisé en ce qu'il comprend un élément dilatable et une enveloppe extensible comportant un premier passage pour ledit filin, et un ou plusieurs passage(s) pour recevoir ledit élément dilatable apte à gonfler l'enveloppe, et pour injecter de l'air comprimé dans la conduite permettant ainsi de propulser le furet le long de la conduite.
Selon une caractéristique de l'invention, l'élément dilatable comprend un anneau dilatable autour d'un conduit central par lequel est injecté l'air comprimé dans la conduite.
Le premier passage présente avantageusement une fente vers l'extérieur de l'enveloppe et le long de celle-ci de manière à introduire et à retirer transversalement le filin. Ce passage peut inclure un tube fendu vers l'extérieur de l'enveloppe et le long de celle-ci, constitué de deux demi-coquilles métalliques.
L'enveloppe peut comprendre en outre une réservation fendue vers l'extérieur de l'enveloppe et le long de celle-ci de manière à recevoir un ou plusieurs câbles déjà présents dans la conduite.
Selon une autre caractéristique de l'invention, l'enveloppe comprend en outre un tube creux pour faciliter le maniement du dispositif et permettre un passage d'air comprimé dans la conduite.
L'enveloppe peut être constituée d'élastomère ou de plastomère et présenter des grains sur l'extérieur de sa surface facilitant l'adhérence de l'enveloppe aux parois de la conduite.
L'élément dilatable et l'enveloppe présentent préférentiellement une forme allongée.
L'élément dilatable comprend éventuellement un tube d'alimentation en air comprimé de l'anneau dilatable, situé le long du passage central de l'élément, et une source d'alimentation en air comprimé à laquelle ledit tube est relié.
Il comprend avantageusement une armature rigide cylindrique à laquelle est associé l'anneau de manière à ce que le passage central ne soit pas obturé lorsque l'anneau est dilaté.
L'anneau présentant une forme allongée, il peut comporter des éléments de serrage de l'anneau sur l'armature à chaque extrémité de l'anneau.
Selon une caractéristique de l'invention, la longueur de l'armature rigide est telle que l'armature se prolonge en dehors de l'enveloppe lorsque l'élément dilatable est placé dans le passage de l'enveloppe apte à le recevoir.
L'armature peut être en métal.
L'anneau peut être constitué d'un tissu nappé d'élastomère ou de plastomère.
L'invention concerne également un procédé de pose dans une conduite par air comprimé d'un filin muni d'un furet, caractérisé en ce qu'il comporte l'étape consistant à propulser ledit furet par flux d'air comprimé à travers au moins un passage d'injection d'air comprimé d'un dispositif de pose selon l'une des revendications précédentes, préalablement installé dans ladite conduite, les étapes d'installation dudit dispositif dans la conduite consistant à :
a- introduire l'enveloppe dudit dispositif de pose dans la conduite,
b- introduire l'élément dilatable dans le passage de l'enveloppe apte à recevoir ledit élément dilatable,
c- gonfler l'élément dilatable en vue de dilater l'enveloppe dans la conduite,
d- cesser le gonflage de l'élément dilatable et maintenir l'élément dilatable gonflé.
Selon une autre caractéristique de l'invention, préalablement à l'installation dudit dispositif de pose, il comporte les étapes consistant à :
A- placer ledit filin dans le premier passage de l'enveloppe;
B- introduire dans la conduite le furet auquel est accroché le filin.
Lorsque la conduite est occupée par un ou plusieurs câbles, il peut comporter l'étape consistant à disposer ledit ou lesdits câble(s) dans la réservation fendue prévue à cet effet.

D'autres particularités et avantages de l'invention apparaîtront clairement à la lecture de la description faite à titre d'exemple non limitatif et en regard des dessins annexés sur lesquels :
la figure 1, déjà décrite représente un chantier de tirage sur plusieurs sections de conduite enterrée,
la figure 2, déjà décrite illustre le principe de l'aiguillage par air comprimé,
les figures 3a) et 3b), déjà décrites représentent un pistolet presse-étoupe,
la figure 4, déjà décrite représente un pistolet selon la demande de brevet WO 97 42690,
les figures 5a) et 5b), déjà décrites illustrent la déformation du pistolet selon la demande de brevet citée, dans une conduite occupée,
les figures 6a) et 6b) représentent l'enveloppe du dispositif selon l'invention,
la figure 7 représente un autre mode de réalisation de l'enveloppe du dispositif selon l'invention,
la figure 8 représente l'anneau gonflable du dispositif selon l'invention,
les figures 9a) à 9d) illustrent les différentes étapes d'une opération d'aiguillage.

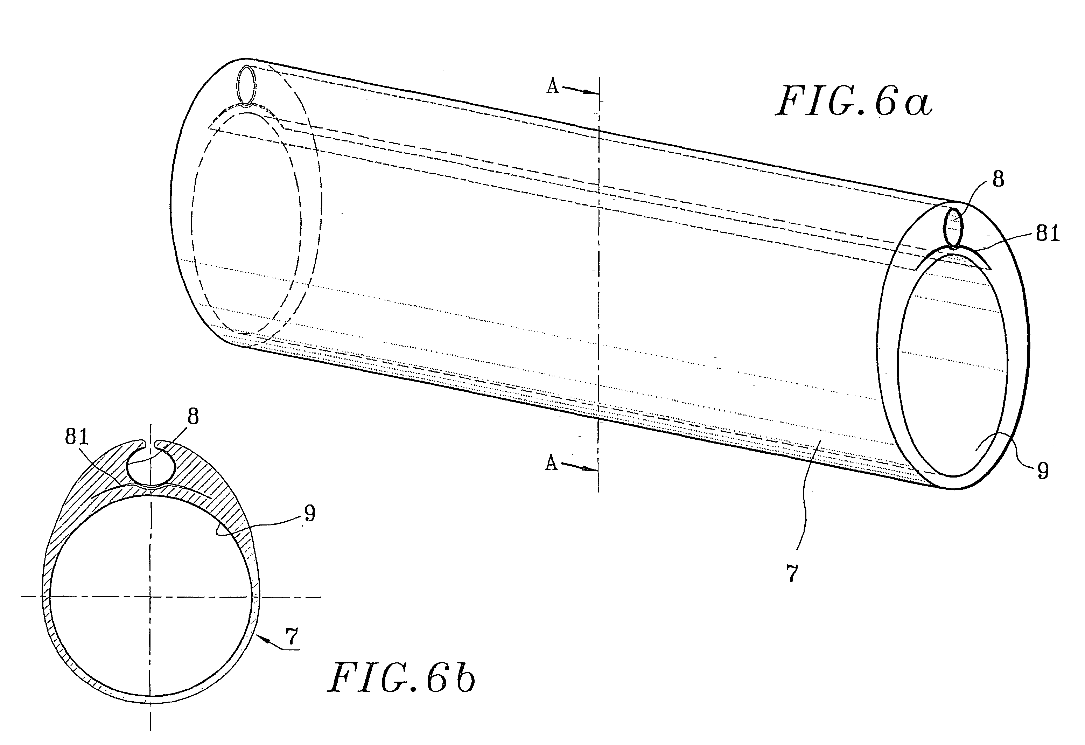

Le dispositif de pose par air comprimé d'un filin muni d'un furet, dans une conduite, consiste selon l'invention en la combinaison d'un élément dilatable et d'une enveloppe extensible 7 représentée selon un premier mode de réalisation figures 6a) et 6b). La figure 6b) est une coupe transversale selon le plan AA de l'enveloppe 7 représentée figure 6a).
Cette enveloppe 7 de préférence de forme allongée, comporte deux passages, l'un 8 pour le filin 4, l'autre 9 pour recevoir l'élément dilatable.
Le premier passage 8 destiné à recevoir le filin, est avantageusement fendu le long de l'enveloppe 7 de manière à ce que l'opérateur puisse insérer transversalement le filin dans l'enveloppe. Il pourra de la même façon libérer le filin de l'enveloppe, lorsque l'opération d'aiguillage et/ou de calibrage sera terminée. Le passage 8 comporte un tube fendu en haut pour le passage du filin et en bas pour son articulation. Il peut être constitué de deux demi-corps ou demi-coquilles métalliques. Il comporte avantageusement une charnière de renfort 81 éventuellement métallique permettant de protéger l'enveloppe 7 au niveau de l'articulation.
Cette enveloppe 7 peut se dilater de manière importante pouvant atteindre 40% d'augmentation du diamètre.
Un dispositif selon l'invention a été réalisé avec une enveloppe de ce type pouvant être utilisée dans des conduites dont le diamètre est compris entre environ 75 mm et 100 mm, voire plus.

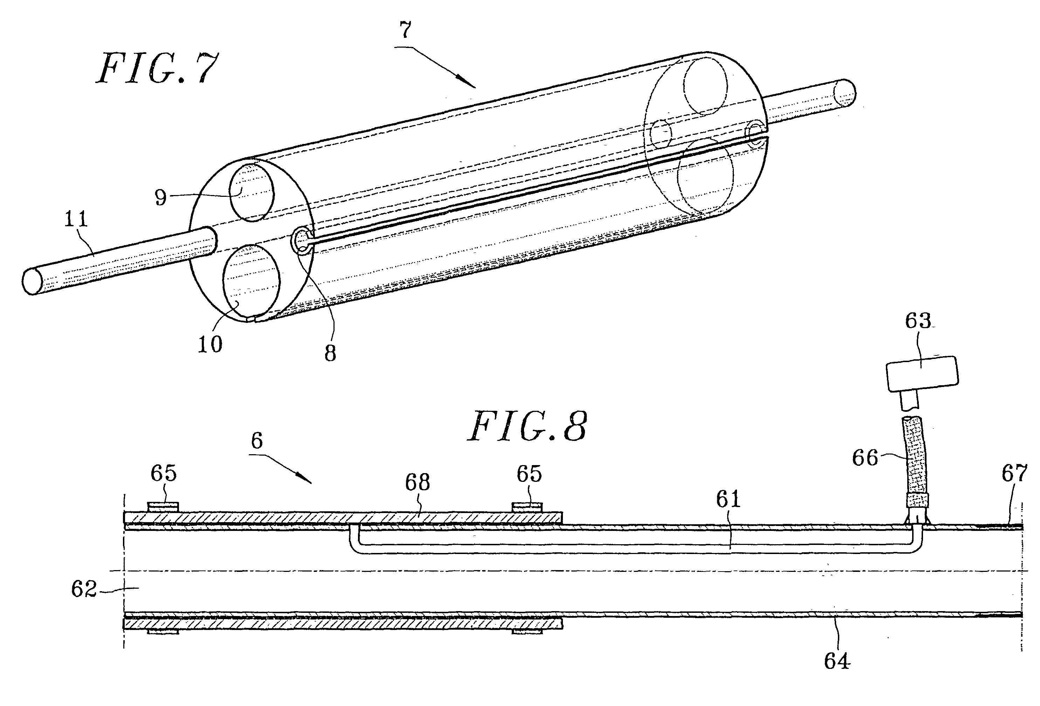

Un autre mode de réalisation de l'enveloppe 7 représenté figure 7, est prévu pour s'adapter à une conduite occupée. L'enveloppe 7 comporte alors en outre un troisième passage, une réservation fendue 10 apte à recevoir le ou les câbles déjà présents dans la conduite. On peut également prévoir un tube creux 11 rigide et dépassant de l'enveloppe 7, facilitant ainsi le maniement du dispositif, et en particulier son installation et désinstallation dans la conduite. Ce tube creux 11 peut également servir de passage supplémentaire, d'air pour propulser le furet et améliorer les performances de l'ensemble.
L'enveloppe 7 représentée figure 7 est tout à, fait adaptée à une conduite de diamètre compris entre environ 75 à environ 85 mm occupée par un seul câble de diamètre compris entre 20 à 30 mm. On peut également l'utiliser dans une conduite occupée par un petit câble, en enrobant ce petit câble d'un adhésif de façon à atteindre artificiellement le diamètre d'un gros câble.
On peut aussi utiliser cette enveloppe dans une conduite vide en bouchant la réservation 10 avec un bouchon approprié.
Mais cette enveloppe ne se dilate pas autant que l'enveloppe décrite précédemment.
L'enveloppe 7 des cas de figures 6 ou 7 est extensible de manière à générer les forces de contact nécessaires à la bonne tenue mécanique du dispositif dans la conduite.
Elle peut être réalisée en élastomère ou plastomère de faible dureté (environ 30 shores A) permettant un écrasement régulier sur les parois de la conduite et, par fluage, une fermeture des fentes longitudinales des passages 8 et éventuellement 10. De plus, en cas de déformation de la conduite (ovalisation 0,7 par exemple), l'enveloppe s'adapte aux parois déformées.
Une incorporation de grains de corindon sur l'extérieur de l'enveloppe 7 permet d'accroître le coefficient de frottement de l'enveloppe sur les parois de la conduite et d'améliorer ainsi l'adhérence.
La mémoire des matériaux permet un retour aux dimensions initiales de l'enveloppe après utilisation.
L'enveloppe 7 peut être obtenue par vulcanisation à chaud ou à froid ou par coulage par injection.

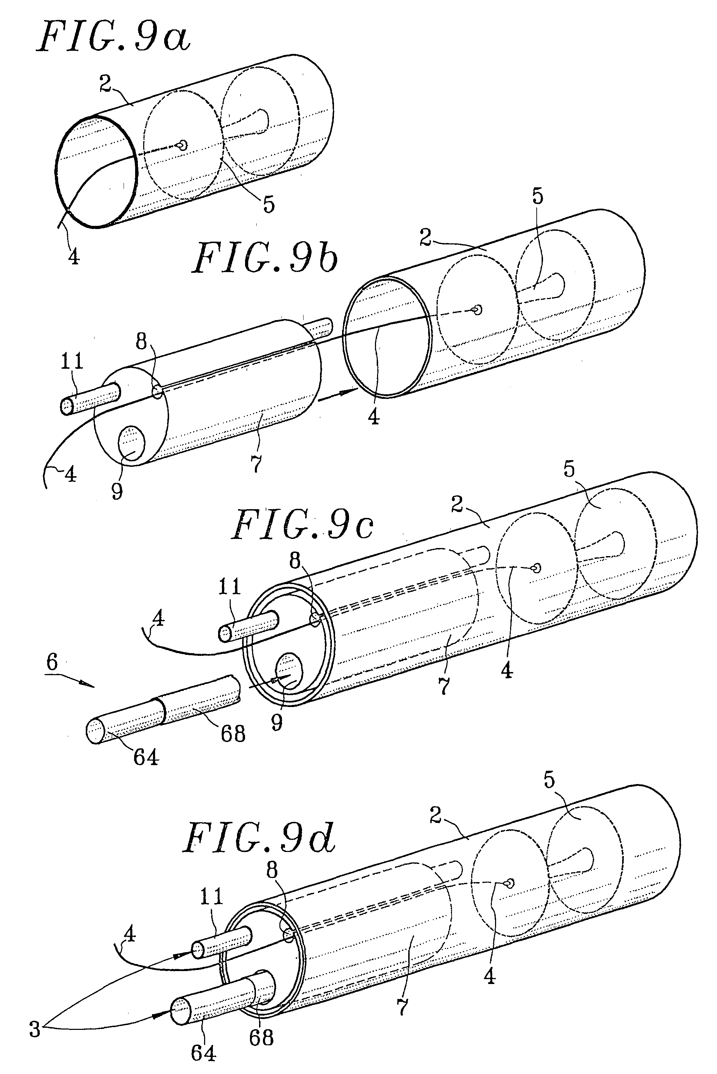

L'élément dilatable 6 représenté en coupe figure 8 présente de préférence une forme allongée.
L'air comprimé issu d'une source d'air comprimé 63 (compresseur ou pompe à pied ou bouteille d'air comprimé ou cartouches jetables ou ...) vient gonfler un anneau dilatable 68 à travers un tube 61 interne à l'anneau 68. Ce tube 61 est de diamètre réduit d'une part pour ne pas obturer le conduit central 62 de l'élément dilatable 6 par lequel sera injecté l'air comprimé chargé de propulser le furet et d'autre part en raison du faible volume d'air nécessaire pour gonfler l'anneau 68. Le tube 61 se prolonge au delà de l'anneau 68 de manière à atteindre la source d'air comprimée 63 (ou le flexible d'alimentation 66 à cette source 63) qui, lorsque l'élément dilatable 6 sera en place dans l'enveloppe 7 elle-même installée dans la conduite, peut être éloignée de la chambre d'accès pour des raisons de commodité d'exploitation.
L'anneau 68 est assemblé éventuellement par collage à une armature cylindrique rigide 64, éventuellement métallique. Il peut aussi, par sécurité, être serré par des éléments de serrage 65 sur cette armature cylindrique rigide 64. Cette armature se prolonge également au delà de l'anneau 68, du même côté que le tube 61. Du côté où elle se prolonge, cette armature 64 se termine éventuellement par un filetage 67 permettant de disposer d'un raccord pour se connecter directement à la source d'air comprimé destiné à traverser le conduit central 62 pour propulser le furet dans la conduite.
L'anneau peut être constitué d'un tissu nappé d'élastomère ou de plastomère.
Cet élément dilatable 6 peut éventuellement ne pas présenter de conduit central 62 pour le passage de l'air comprimé 3. Dans ce cas, l'air comprimé 3 traversera seulement le tube 11.
Des mesures ont été effectuées avec un élément dilatable 6 placé dans le passage 9 d'une enveloppe 7 pour conduite libre, telle que représentée figures 6a) et 6b). Pour une conduite ayant un diamètre extérieur de 80 mm et intérieur de 75 mm, l'enveloppe 7 résiste à une force d'éjection inférieure ou égale à 550 daN, l'élément dilatable 6 étant gonflé à une pression de 4 bar, ou à une force d'éjection pouvant atteindre 650 daN lorsque l'élément dilatable 6 est gonflé à une pression de 5 bar. Ces résultats représentent, dans les deux cas une amélioration considérable par rapport par exemple aux résultats obtenus avec un pistolet presse-étoupe.

On va à présent décrire la réalisation d'une opération d'aiguillage avec le dispositif selon l'invention, illustrée par les figures 9a) à 9d).
Le furet 5 auquel est accroché un filin 4 est, en premier lieu introduit dans l'extrémité de la conduite 2 (figure 9a).
Le filin 4 est placé dans le passage 8 de l'enveloppe 7 (figure 9b). Les étapes 9a et 9b peuvent êtres interverties. Cette enveloppe 7 est alors introduite dans la conduite 2 (flèche de la figure 9 b). Si la conduite est occupée, la réservation fendue (non représentée) est disposée autour du ou des câbles en place.
L'élément dilatable 6 est ensuite introduit dans le passage 9 qui lui est réservé dans l'enveloppe 7 (flèche de la figure 9c et figure 9d). L'élément dilatable 6 peut aussi être introduit dans l'enveloppe 7 avant que l'enveloppe 7 soit introduite dans la conduite 2.
On procède alors à l'aide d'un compresseur au gonflage de l'anneau 68 à une pression interne minimale de 4 bars. L'anneau gonflé, on cesse le gonflage en déconnectant l'arrivée d'air du compresseur sur l'anneau, tout en le maintenant sous pression. La dilatation de l'anneau 68 provoque également une dilatation de l'enveloppe 7 qui vient adhérer aux parois de la conduite 2. L'opération d'installation du dispositif dans la conduite est alors achevée.

On connecte alors le compresseur au conduit 62 et éventuellement au tube 11. L'opération de propulsion du furet 5 débute alors. Au fur et à mesure de la progression du furet 5 dans la conduite 2, le filin 4 se dévide et rentre dans la conduite 2 par le passage 8.
Lorsque le furet 5 atteint l'autre extrémité de la conduite 2, le flux d'air 3 est arrêté et l'opération d'aiguillage terminée. L'élément 6 est dégonflé et extrait de l'enveloppe 7. L'enveloppe 7 ainsi dégonflée peut alors être extraite de la conduite 2, libérant le ou les câbles en place. Enfin, le filin 4 peut être transversalement dégagé du passage 8 de l'enveloppe 7.
En cas de pose sur une grande longueur, le dispositif selon l'invention peut être récupéré et réutilisé sur les sections suivantes.

Dans le cas d'une opération de calibrage où l'on ne lancerait qu'un furet de calibrage sans filin, il suffit d'utiliser un dispositif tel que décrit en obturant le passage 8, et éventuellement 10, voire de n'utiliser que l'élément dilatable 6 en l'installant directement dans la conduite 2.

## Revendications

1. Dispositif de pose (1) dans une conduite (2), par air comprimé (3), d'un filin (4) muni d'un furet (5), **caractérisé en ce qu'**il comprend un élément dilatable (6) et une enveloppe extensible (7) comportant un premier passage (8) pour ledit filin, et un ou plusieurs passage(s) pour recevoir ledit élément dilatable (6) apte à gonfler l'enveloppe (7), et pour injecter de l'air comprimé (3) dans la conduite (2) permettant ainsi de propulser le furet (5) le long de la conduite (2).

2. Dispositif selon la revendication précédente, **caractérisé en ce que** l'élément dilatable (6) comprend un anneau dilatable (68) autour d'un conduit central (62) par lequel est injecté l'air comprimé (3) dans la conduite (2).

3. Dispositif selon l'une des revendications précédentes, **caractérisé en ce que** le premier passage (8) présente une fente vers l'extérieur de l'enveloppe (7) et le long de celle-ci de manière à introduire et à retirer transversalement le filin (4).

4. Dispositif selon la revendication précédente, **caractérisé en ce que** le premier passage (8) inclut un tube fendu vers l'extérieur de l'enveloppe (7) et le long de celle-ci, constitué de deux demi-coquilles métalliques.

5. Dispositif selon l'une des revendications précédentes, **caractérisé en ce que** l'enveloppe (7) comprend en outre une réservation fendue (10) vers l'extérieur de l'enveloppe (7) et le long de celle-ci de manière à recevoir un ou plusieurs câbles déjà présents dans la conduite (2).

6. Dispositif selon l'une des revendications précédentes, **caractérisé en ce que** l'enveloppe (7) comprend en outre un tube (11) creux pour faciliter le maniement du dispositif et permettre un passage d'air comprimé dans la conduite (2).

7. Dispositif selon l'une des revendications précédentes, **caractérisé en ce que** l'enveloppe (7) est constituée d'élastomère ou de plastomère.

8. Dispositif selon l'une des revendications précédentes, **caractérisé en ce que** l'enveloppe (7) présente des grains sur l'extérieur de sa surface facilitant l'adhérence de l'enveloppe (7) aux parois de la conduite (2).

9. Dispositif selon l'une des revendications précédentes, **caractérisé en ce que** l'élément dilatable (6) et l'enveloppe (7) présentent une forme allongée.

10. Dispositif selon l'une des revendications 2 à 9, **caractérisé en ce que** l'élément dilatable (6) comprend un tube (61) d'alimentation en air comprimé de l'anneau (68) dilatable, situé le long du passage central (62) de l'élément dilatable (6), et une source d'alimentation en air comprimé (63) à laquelle ledit tube (61) est relié.

11. Dispositif selon l'une des revendications 2 à 10, **caractérisé en ce que** l'élément dilatable (6) comprend une armature (64) rigide cylindrique à laquelle est associé l'anneau (68) de manière à ce que le passage central (62) ne soit pas obturé lorsque l'anneau (68) est dilaté.

12. Dispositif selon la revendication précédente, l'anneau (68) présentant une forme allongée, **caractérisé en ce qu'**il comporte des éléments de serrage (65) de l'anneau (68) sur l'armature (64) à chaque extrémité de l'anneau.

13. Dispositif selon l'une des revendications 11 ou 12, **caractérisé en ce que** la longueur de l'armature rigide (64) est telle que l'armature (64) se prolonge en dehors de l'enveloppe (7) lorsque l'élément dilatable (6) est placé dans le passage (9) de l'enveloppe (7) apte à le recevoir.

14. Dispositif selon l'une des revendications 11 à 13, **caractérisé en ce que** l'armature est en métal.

15. Dispositif selon l'une des revendications 2 à 14, **caractérisé en ce que** l'anneau (68) est constitué d'un tissu nappé d'élastomère ou de plastomère.

16. Procédé de pose dans une conduite par air comprimé d'un filin muni d'un furet, **caractérisé en ce qu'**il comporte l'étape consistant à propulser ledit furet par flux d'air comprimé à travers au moins un passage d'injection d'air comprimé d'un dispositif de pose selon l'une des revendications précédentes, préalablement installé dans ladite conduite, les étapes d'installation dudit dispositif dans la conduite consistant à :
a- introduire l'enveloppe dudit dispositif de pose dans la conduite,
b-introduire l'élément dilatable dans le passage de l'enveloppe apte à recevoir ledit élément dilatable,
c-gonfler l'élément dilatable en vue de dilater l'enveloppe dans la conduite,
d- cesser le gonflage de l'élément dilatable et maintenir l'élément dilatable gonflé.

17. Procédé selon la revendication 16, **caractérisé en ce que** préalablement à l'installation dudit dispositif de pose, il comporte les étapes consistant à:
A-placer ledit filin dans le premier passage de l'enveloppe,
B- introduire dans la conduite le furet auquel est accroché le filin.

18. Procédé selon la revendication précédente, et selon lequel la conduite est occupée par un ou plusieurs câbles, **caractérisé en ce qu'**il comporte l'étape consistant à disposer ledit ou lesdits câble(s) dans une réservation fendue de l'enveloppe prévue à cet effet.

## Patentansprüche

1. Vorrichtung (1) zum Verlegen durch Druckluft (3) eines mit einem Rohrreiniger (5) versehenen Taus (4) in einer Rohrleitung (2), **dadurch gekennzeichnet, dass** sie ein dehnbares Element (6) und einen elastischen Mantel (7), der einen ersten Durchgang (8) für das Tau umfasst, und einen oder mehrere Durchgänge umfasst, um das dehnbare Element (6) aufzunehmen, das dazu geeignet ist, den Mantel (7) aufzupumpen, und um Druckluft (3) in die Rohrleitung (2) einzupumpen, wodurch der Rohrreiniger (5) die Rohrleitung (2) entlang vorgetrieben werden kann.

2. Vorrichtung nach dem vorhergehenden Anspruch, **dadurch gekennzeichnet, dass** das dehnbare Element (6) einen dehnbaren Ring (68) um eine mittlere Leitung (62) herum umfasst, durch welche die Druckluft (3) in die Rohrleitung (2) eingepumpt wird.

3. Vorrichtung nach einem der vorhergehenden Ansprüche, **dadurch gekennzeichnet, dass** der erste Durchgang (8) einen Schlitz zur Außenseite des Mantels (7) hin und daran entlang aufweist, um das Tau (4) quer einzuführen und zu entnehmen.

4. Vorrichtung nach dem vorhergehenden Anspruch, **dadurch gekennzeichnet, dass** der erste Durchgang (8) eine Röhre umfasst, die zur Außenseite des Mantels (7) hin und daran entlang aufgeschlitzt ist und aus zwei Halbschalen aus Metall besteht.

5. Vorrichtung nach einem der vorhergehenden Ansprüche, **dadurch gekennzeichnet, dass** der Mantel (7) außerdem eine Aussparung (10) umfasst, die zur Außenseite des Mantels (7) hin und daran entlang aufgeschlitzt ist, um ein oder mehrere bereits in der Rohrleitung (2) befindliche Kabel aufzunehmen.

6. Vorrichtung nach einem der vorhergehenden Ansprüche, **dadurch gekennzeichnet, dass** der Mantel (7) außerdem eine hohle Röhre (11) umfasst, um die Handhabung der Vorrichtung zu erleichtern und einen Druckluftdurchgang in der Rohrleitung (2) zu ermöglichen.

7. Vorrichtung nach einem der vorhergehenden Ansprüche, **dadurch gekennzeichnet, dass** der Mantel (7) aus Elastomer oder Plastomer besteht.

8. Vorrichtung nach einem der vorhergehenden Ansprüche, **dadurch gekennzeichnet, dass** der Mantel (7) an der Außenseite seiner Oberfläche eine Körnung aufweist, welche das Haftvermögen des Mantels (7) an den Wänden der Rohrleitung (2) erleichtert.

9. Vorrichtung nach einem der vorhergehenden Ansprüche, **dadurch gekennzeichnet, dass** das dehnbare Element (6) und der Mantel (7) eine längliche Form aufweisen.

10. Vorrichtung nach einem der Ansprüche 2 bis 9, **dadurch gekennzeichnet, dass** das dehnbare Element (6) eine Röhre (61) für die Druckluftzufuhr des dehnbaren Ringes (68), der sich entlang des Mitteldurchgangs (62) des dehnbaren Elements (6) befindet, und eine Druckluftzufuhrquelle (63), mit der die Röhre (61) verbunden ist, umfasst.

11. Vorrichtung nach einem der Ansprüche 2 bis 10, **dadurch gekennzeichnet, dass** das dehnbare Element (6) eine steife, zylindrische Verstärkung (64) umfasst, zu welcher der Ring (68) gehört, so dass der Mitteldurchgang (62) nicht abgedichtet ist, wenn der Ring (68) gedehnt wird.

12. Vorrichtung nach dem vorhergehenden Anspruch, wobei der Ring (68) eine längliche Form aufweist, **dadurch gekennzeichnet, dass** er Elemente (65) zum Spannen des Ringes (68) auf der Verstärkung (64) an jedem Ende des Ringes umfasst.

13. Vorrichtung nach einem der Ansprüche 11 oder 12, **dadurch gekennzeichnet, dass** die Länge der steifen Verstärkung (64) derart ist, dass die Verstärkung (64) außerhalb des Mantels (7) verlängert ist, wenn das dehnbare Element (6) in den Durchgang (9) des Mantels (7) gesetzt wird, der es aufnehmen kann.

14. Vorrichtung nach einem der Ansprüche 11 bis 13, **dadurch gekennzeichnet, dass** die Verstärkung aus Metall besteht.

15. Vorrichtung nach einem der Ansprüche 2 bis 14, **dadurch gekennzeichnet, dass** der Ring (68) aus einem mit Elastomer oder Plastomer überzogenen Stoff besteht.

16. Verfahren zum Verlegen durch Druckluft eines mit einem Rohrreiniger versehenen Taus in einer Rohrleitung, **dadurch gekennzeichnet, dass** es den Arbeitsschritt umfasst, der darin besteht, den Rohrreiniger durch einen Druckluftstrom durch mindestens einen Durchgang zum Drucklufteinpumpen einer Verlegungsvorrichtung nach einem der vorhergehenden Ansprüche, die zuvor in der Rohrleitung installiert wird, vorzutreiben, wobei die Arbeitsschritte zur Installation der Vorrichtung in der Rohrleitung folgendes umfassen:
a) Einführen des Mantels der Verlegungsvorrichtung in die Rohrleitung,
b) Einführen des dehnbaren Elements in den Manteldurchgang, der dazu geeignet ist, das dehnbare Element aufzunehmen,
c) Aufpumpen des dehnbaren Elements, um den Mantel in der Rohrleitung zu dehnen,
d) Einstellen des Aufpumpens des dehnbaren Elements und Aufrechterhalten des aufgepumpten dehnbaren Elements.

17. Verfahren nach Anspruch 16, **dadurch gekennzeichnet, dass** es vor der Installation der Verlegungsvorrichtung folgende Schritte umfasst:
a) Einsetzen des Taus in den ersten Manteldurchgang,
b) Einführen des Rohrreinigers, an dem das Tau befestigt ist, in die Rohrleitung.

18. Verfahren nach dem vorhergehenden Anspruch, und wobei die Rohrleitung mit einem oder mehreren Kabeln belegt ist, **dadurch gekennzeichnet, dass** es den Arbeitsschritt umfasst, der darin besteht, das oder die Kabel in einer dazu bereitgestellten, aufgeschlitzten Aussparung des Mantels anzuordnen.

## Claims

1. Device for air-actuated (3) insertion of a wire (4) provided with a shuttle (5) in a conduit, **characterised in that** it comprises a dilatable element (6) and an extensible housing (7) comprising a first passage (8) for said wire, and one or more passage(s) to receive said dilatable element (6) capable of inflating the housing (7), and to inject compressed air (3) into the conduit (2) thus propelling the shuttle (5) along the conduit (2).

2. Device according to the above claim, **characterised in that** the dilatable element (6) comprises a dilatable ring (68) around a central pipe (62) through which the compressed air (3) is injected into the conduit (2).

3. Device according to any of the above claims, **characterised in that** the first passage (8) has a slit towards the outside of the housing (7) and along the latter so as to insert and retract the wire (4) crosswise.

4. Device according to the above claim, **characterised in that** the first passage (8) has a tube split towards the outside of the housing (7) and along the latter, comprised of two metal female moulds.

5. Device according to any of the above claims, **characterised in that** the housing (7) also comprises a split inlet (10) towards the outside of the housing (7) and along the latter so as to receive one or several cable(s) already inside the conduit (2).

6. Device according to any of the above claims, **characterised in that** the housing (7) also comprises a hollow tube (11) to simplify the handling of the device and to allow for a passage of compressed air in the conduit (2).

7. Device according to any of the above claims, **characterised in that** the housing (7) is made of elastomer or plastomer.

8. Device according to any of the above claims, **characterised in that** the housing (7) has granules on its outer face facilitating the adherence of the housing (7) to the sides of the conduit (2).

9. Device according to any of the above claims, **characterised in that** the dilatable element (6) and the housing (7) have an elongated shape.

10. Device according to any of claims 2 to 9, **characterised in that** the dilatable element (6) comprises a compressed air supply tube (61) to the dilatable ring (68) located along the central passage (62) of the dilatable element (6), and a compressed air source (62) to which said tube (61) is connected.

11. Device according to any of claims 2 to 10, **characterised in that** the dilatable element (6) comprises a cylindrical stiff reinforcement (64) to which is connected the ring (68) so that the central passage (62) is not closed up when the ring (68) is inflated.

12. Device according to the above claim, the ring (68) having an elongated shape, **characterised in that** it comprises clamping elements (65) of the ring (68) onto the reinforcement (64) at each end of the ring.

13. Device according to any of claims 11 or 12, **characterised in that** the length of the stiff reinforcement (64) is such that the reinforcement (64) extends beyond the housing (7) when the dilatable element (6) is placed in the passage (9) of the housing (7) capable of receiving it.

14. Device according to any of claims 11 to 13, **characterised in that** the reinforcement is made of metal.

15. Device according to any of claims 2 to 14, **characterised in that** the ring (68) is made of an elastomer or plastomer-covered cloth.

16. Method for air-actuated (3) insertion of a wire (4) provided with a shuttle (5) in a conduit, **characterised in that** it comprises the step consisting in propelling said shuttle via a flow of compressed air through at least one compressed air injection passage of an insertion device according to any of the above claims, previously installed in said conduit, the installation steps of said device into the pipe consisting in :
a- introducing the housing of said insertion device into the conduit;
b- introducing the dilatable element into the passage of the housing capable of receiving said dilatable element ;
c- inflating the dilatable element with the aim of expanding the housing in the pipe ;
d- stopping the inflation of the dilatable element and maintaining the dilatable element inflated.

17. Method according to claim 16, **characterised in that** prior to the installation of said insertion device, it comprises the steps consisting in :
a- placing said wire into the first passage of the housing;
b- introducing, into the conduit, the shuttle onto which is hooked the wire.

18. Method according to the above claim, and whereby the conduit contains one or more cable(s), **characterised in that** it comprises the step consisting in placing said cable(s) into a split inlet of the housing provided for this purpose.
